(19) Europäisches Patentamt / European Patent Office / Office européen des brevets

(11) **EP 3 519 115 B1**

(12) **EUROPÄISCHE PATENTSCHRIFT**

(45) Veröffentlichungstag und Bekanntmachung des Hinweises auf die Patenterteilung:
**11.11.2020** Patentblatt **2020/46**

(21) Anmeldenummer: **17768101.2**

(22) Anmeldetag: **14.09.2017**

(51) Int Cl.:
**B21B 39/00** (2006.01)   **C03B 35/18** (2006.01)
**F27B 9/24** (2006.01)   **F27D 1/00** (2006.01)
**F27D 3/02** (2006.01)   **F27D 9/00** (2006.01)

(86) Internationale Anmeldenummer:
**PCT/EP2017/073072**

(87) Internationale Veröffentlichungsnummer:
**WO 2018/059940 (05.04.2018 Gazette 2018/14)**

(54) **VERFAHREN ZUM BETRIEB EINER KÜHLBAREN OFENROLLE**

METHOD FOR OPERATING A COOLABLE OVEN ROLL

PROCÉDÉ DE FONCTIONNEMENT D'UN ROULEAU DE FOUR REFROIDISSABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2016 DE 102016218547**
**23.05.2017 DE 102017208710**

(43) Veröffentlichungstag der Anmeldung:
**07.08.2019** Patentblatt **2019/32**

(73) Patentinhaber: **SMS Group GmbH**
**40237 Düsseldorf (DE)**

(72) Erfinder:
• **KLINKENBERG, Christian**
**58313 Herdecke (DE)**

• **NEUMANN, Luc**
**40223 Düsseldorf (DE)**
• **SOMMERS, Ulrich**
**40627 Düsseldorf (DE)**
• **BÖCHER, Tilmann**
**40489 Düsseldorf (DE)**
• **PIEPER, Markus**
**40822 Mettmann-Unterrath (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**EP-A1- 0 857 933      EP-A1- 2 317 545**
**DE-T2- 69 313 627      US-B2- 6 678 628**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb einer kühlbaren Ofenrolle zum Transport eines Bandes oder einer Bramme durch einen Ofen, umfassend eine um eine Achse drehbar gelagerte Tragachse, auf der eine Anzahl an Tragringen angeordnet ist, wobei im axialen Bereich zwischen zumindest zwei Tragrinnen eine Isolierung angeordnet ist, wobei die Isolierung zumindest teilweise aus einem Fasermaterial besteht, bei dem die Ofenrolle in ihrem Inneren mit einem Kühlmedium durchströmt wird, um die Ofenrolle zu kühlen.

Konventionelle Ofenrollen haben eine Wasserkühlung, um die Rollen vor zu hohen Temperaturen und damit verbundenem vorzeitigen Versagen zu schützen. Der damit verbundene Wärmeentzug des Ofens wird bei herkömmlichen Rollen über eine Betonisolierung verringert.

Beispiele hierfür sind in der EP 0 471 218 A1, in der EP 0 397 231 A1, in der WO 2015/181736 A1, in der EP 1 197 721 B1, in der DE 2 205 694 A, in der DE 40 22 768 C2 und in der DE 693 13 627 T2 beschrieben.

Eine Ofenrolle der eingangs genannten Art ist weiterhin aus der EP 0 857 933 A1 bekannt. Ähnliche und andere Lösungen zeigen die US 6 678 628 B2, die DE 693 13 627 T2, die EP 2 317 545 A1 und die US 4 991 276 A.

Bei den vorbekannten Lösungen ergibt sich nachteilig ein relativ hoher Energieverbrauch im Ofen, dadurch, dass durch die Kühlung relativ viel Wärme aus dem Ofen ausgetragen wird. Ferner ist das Gewicht der Ofenrollen relativ hoch.

Der Erfindung liegt daher die Auf gabe zugrunde, Maßnahmen vorzuschlagen, mit denen es in einfacherer Weise möglich ist, den Zustand der Ofenrolle zu beurteilen und so eine effektive vorbeugende Instandhaltung installieren zu können.

Die Lösu n g dieser Aufgabe durch die Erfindung ist dadurch gekennzeichnet, dass erfindungsgemäß die Schritte vorgesehen sind:

a) Messen der Temperatur ($T_{Einlass}$) des in die Ofenrolle eintretenden Kühlmediums und Messung der Temperatur ($T_{Auslass}$) des die Ofenrolle verlassenden Kühlmediums und bilden der Temperaturdifferenz ($\Delta T = T_{Auslass} - T_{Einlass}$);

b) Messen der Mengenflusses ($\dot{m}$) des die Ofenrolle durchströmenden Kühlmediums);

c) Bilden des Produkts aus Temperaturdifferenz ($\Delta T$) und Mengenfluss ($\dot{m}$);

d) Beobachten des Produkts aus Temperaturdifferenz ($\Delta T$) und Mengenfluss ($\dot{m}$) über der Zeit;

e) Auslösen eines Signals, sobald der Wert des Produkts aus Temperaturdifferenz ($\Delta T$) und Mengenfluss ($\dot{m}$) einen vorgegebenen Grenzwert überschreitet.

Dabei ist bevorzugt vorgesehen, dass als Grenzwert ein prozentualer Wert eines Durchschnittswerts verwendet wird, der sich während einer vorgegebenen Kalibrierzeit bei einer neu zum Einsatz kommenden Ofenrolle ergibt. Danach wird zunächst eine neu montierte Ofenrolle in der erläuterten Weise überwacht, um einen Referenzwert für das Produkt aus Temperaturdifferenz und Mengenfluss zu erhalten. Dieser Referenzwert wird dann bei der Überwachung zu Grunde gelegt und das Signal beispielsweise dann ausgelöst, wenn der Wert um mindestens 10 % überschritten wird.

Im Vergleich zu vorbekannten Lösungen erlaubt das vorgeschlagene Konzept eine weitere Verringerung des Wärmeentzugs bei einer Ofenrolle, wozu die genannte Faserisolierung zum Einsatz kommt.

Neben einer wesentlichen Gewichtsreduktion (bis zu mehr als 90% des Gewichts einer herkömmlichen Ofenrolle) kann gleichzeitig eine erhebliche Verringerung des Wärmeverlustes pro Rolle erreicht werden; es ist eine ca. 50-prozentige Reduzierung bei Ofentemperaturen von 1.200 °C möglich.

Im Vergleich zu herkömmlichen Ofenrollen mit Betonisolierung werden insbesondere folgende Vorteile erzielt: Durch die Faser-Isolierung der Ofenrollen ist eine Verringerung des Energieverbrauchs bei einem üblichen CSP-Ofen bei üblichen Bedingungen um ca. 20 % möglich.

Es sind Einsatztemperaturen bis über 1.250 °C durch Einsatz von Tragringen aus hochtemperaturbeständigem Werkstoff möglich, wobei insbesondere der Werkstoff 60HTR eingesetzt wird.

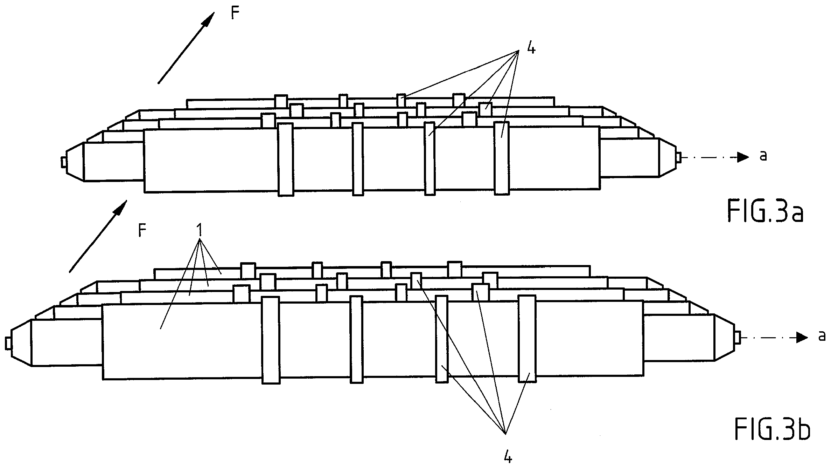

Weiterhin ist eine Verbesserung der Oberflächenqualität auf der Brammenunterseite möglich, was sich durch Absenkung der Kontaktpressung zwischen Bramme und Tragringen ergibt. Dazu wird die Anordnung der Tragringe mittels eines Optimierungsprogramms individuell an die Produktionsanforderungen bezüglich Brammenbreite, -länge und -gewicht angepasst. Dieses Rechenprogramm enthält einen Algorithmus, der das Brammengewicht aller auf einer Produktionsanlage gefertigten Abmessungen gleichmäßig auf möglichst viele Tragringe verteilt. Durch einen Versatz (in Förderrichtung) werden Laufspuren aufgrund von Zunderabdruck oder Temperaturstreifigkeit verringert. Wesentliche Bestandteile des Algorithmus sind die Hertz'sche Pressung zur Berechnung des Auflagedrucks auf den Tragringen. Dabei wird auch die Durchbiegung der Rollen berücksichtigt. Die Anordnung des Tragringversatzes wird so ausgelegt, dass auch die jeweils schmalsten und breitesten Brammenabmessungen optimal gestützt werden. Die Tragringanordnung pro Rolle wird periodisch wiederholt. Das später diskutierte Ausführungsbeispiel gemäß Fig. 3 zeigt beispielsweise zwei Anordnungen, bei denen sich die Tragringanordnung jeweils nach der vierten Rolle wiederholt.

Mit dem vorgeschlagenen Verfahren ist eine vorbeugende Instandhaltung durch Bestimmung und Überwachung des Wärmeentzugs der einzelnen Ofenrollen möglich.

In der Zeichnung sind Ausführungsbeispiele der Erfindung dargestellt. Es zeigen:

Fig. 1 schematisch die Vorderansicht einer wassergekühlten Ofenrolle,

Fig. 2 den Verlauf von Wärmeverlusten über der Zeit einer wassergekühlten Ofenrolle, einmal bei einer konventionellen Rolle und einmal bei einer erfindungsgemäßen Rolle,

Fig. 3a in perspektivischer Darstellung vier in Förderrichtung aufeinander folgende Ofenrollen nach einer ersten Ausgestaltung,

Fig. 3b in perspektivischer Darstellung vier in Förderrichtung aufeinander folgende Ofenrollen nach einer zweiten Ausgestaltung und

Fig. 4 den Verlauf von Wärmeverlusten über der Zeit, bei der eine fortschreitende Schädigung der Ofenrolle mit der Zeit erkennbar ist.

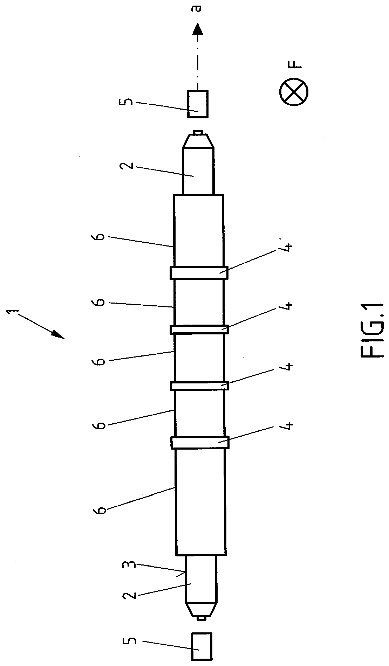

In Figur 1 ist schematisch der Aufbau einer wassergekühlten Ofenrolle 1 zu sehen. Die Ofenrolle 1 weist eine Achse a auf, um die sie drehen kann. Eine Förderrichtung F steht in Figur 1 senkrecht auf der Zeichenebene; in Förderrichtung F wird Gut transportiert, das einen Ofen passiert, in dem die Ofenrolle 1 eingebaut ist.

Die Ofenrolle 1 hat eine zylindrische Tragachse 2 sowie einen zylindrischen Außenumfang 3. Die Tragachse kann sowohl aus einem, vorzugsweise geschmiedeten oder gewalzten, massiven Stabmaterial oder aus einem, vorzugsweise im Schleuderguss hergestellten, Rohr bestehen. Auf der Tragachse 2 mit Außenumfang 3 sind in axialem Abstand mehrere Tragringe 4 angeordnet. Die Tragringe 4 stellen den Kontakt mit dem zu transportierenden Gut her. Zwischen den Tragringen ist das Isoliermaterial 6 angeordnet. Das Isoliermaterial besteht aus einem Fasermaterial, bevorzugt aus Aluminium-Oxid und/oder um Silizium-Oxid.

In Figur 1 schematisch angedeutet ist noch eine Mess- und Regelungseinrichtung 5, die die Durchströmung der Ofenrolle 1 mit Kühlwasser sensorisch erfasst und beeinflusst.

Für die Isolierung der Ofenrolle 1 kommt vorliegend eine spezielle Feuerfestwolle, vorzugsweise aus Al- und Si-Oxid, zum Einsatz. Diese Feuerfestwolle wird zu maßgerechten Hohlzylindern vorgefertigt. Beim Zusammenbau der Ofenrolle 1 werden die auf den jeweiligen Tragringabstand abgemessenen Feuerfestzylinder über eine Tragachse gesteckt. Anschließend wird der nachfolgende Tragring 4 auf die Tragachse gesteckt, fest an den Feuerfestzylinder gepresst und auf der Tragachse über ein geeignetes Fügeverfahren, insbesondere Schweißen, fixiert.

Im Vergleich zum konventionellen Beton als Material für die Isolierung 6 ist das Gewicht der Ofenrolle 1 durch die genannte Ausgestaltung nunmehr deutlich reduziert. Weiterhin wird der Zusammenbau der Ofenrolle durch die Baukastenweise vereinfacht. Durch den Wegfall von Aushärtezeiten erfolgt der Zusammenbau schneller. Durch die besseren Isoliereigenschaften wird der Energieentzug des Ofens deutlich reduziert.

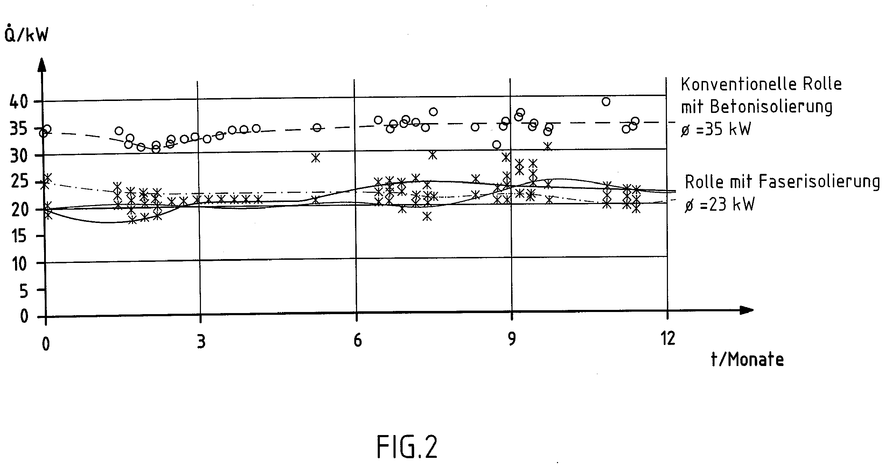

In Figur 2 ist ein Beispiel für den Verlauf der Wärmeverluste wassergekühlter Ofenrollen mit Betonisolierung nach dem Stand der Technik (siehe hierzu den oberen Bereich der konventionellen Rolle mit Betonisolierung) und für die erfindungsgemäße Faserisolierung der Ofenrolle (siehe hierzu den unteren Bereich der Rolle mit Faserisolierung) dargestellt.

Die Tragringe 4 können aus einer handelsüblichen Legierung, insbesondere des Typs 2.4879 (DIN 1736), bestehen, vorzugsweise bestehen sie aber aus einer hochtemperatur- und korrosionsbeständigen Legierung, wie z. B. 60HTR. Solche Werkstoffe können herstellungsbedingt nur im Schleudergussverfahren verarbeitet werden. Von einem so hergestellten Rohr werden Scheiben abgeschnitten, die dann jeweils zu Tragringen 4 weiterverarbeitet werden. Mit den genannten Tragringlegierungen kann der mechanische, chemische und thermische Verschleiß der Tragringe 4 bei bestehenden Tunnelöfen sowie bei Tunnelöfen der nächsten Generation mit höheren Heiztemperaturen weiter verringert werden.

Zur Verbesserung der Oberflächenqualität auf der Brammenunterseite kann das optimale Ofenrollendesign mit einem Auslegungsprogramm bestimmt werden. Betrachtet werden dazu mehrere im Tunnelofen hintereinander angeordnete Ofenrollen 1 mit einer frei definierbaren Anzahl an Tragringen 4, auf denen eine Dünnbramme in beliebiger Breite und Dicke liegt. Über die Anzahl der belasteten Tragringe 4 wird die Auflagefläche bestimmt. Daraus werden unter Berücksichtigung des Brammengewichts die Kontaktpressungen zwischen Bramme und Tragringen berechnet. Mit Hilfe eines Optimierungsalgorithmus kann dann diejenige Tragringanordnung mit minimaler Kontaktpressung errechnet werden. Dabei werden die produktspezifischen Brammenabmessungen berücksichtigt.

In Figur 3 sind hierzu zwei Ausführungsbeispiele dargestellt. Gezeigt sind exemplarisch zwei unterschiedliche Anordnungen der Tragringe 4 auf der Tragachse 2 der Ofenrolle 1.

Wie in Figur 3a zu sehen ist, folgt auf eine erste Ofenrolle mit ihren entsprechend angeordneten Tragringen 4 in Förderrichtung eine solche, bei der die Tragringe 4 versetzt angeordnet sind. Die weiter folgende Ofenrolle 1 weist ihre Tragringe 4 wiederum an denselben Stellen auf wie die erste Ofenrolle. Die schließlich weiter folgende vierte Ofenrolle hat ihre Tragringe 4 an denselben Stellen wie die zweite Ofenrolle.

Bei der Lösung nach Figur 3b sind die Lagen der Tragringe 4 verteilt angeordnet, was sich durch die oben erwähnte Berechnung ergab. Hierdurch kann eine optimale Stützung des zu transportierenden Guts erreicht werden.

Somit können also die Tragringe 4 - vorzugsweise gestützt durch ein Rechenprogramm, welches hierfür spezifische Daten liefert - so platziert werden, dass Laufspuren am zu fördernden Gut vermieden werden können.

Der Zustand der gekühlten Rollen 1 wird gemäß dem vorgeschlagenen Verfahren über den Wärmeentzug der einzelnen Rollen erfasst. Dazu werden an jeder Rolle der Kühlwasserdurchfluss sowie der Temperaturanstieg des Kühlwassers über eine vergleichende Messung der Wassertemperatur auf der Ein- und Auslassseite bestimmt. Der Wärmeentzug entspricht dem Wärmefluss $\dot{Q}_{Rolle}$ in kW und wird über die Temperaturdifferenz $\Delta T = T_{Auslass} - T_{Einlass}$ und den Kühlwasserdurchsatz $\dot{m}$ in kg/s berechnet:

$$\dot{Q}_{Rolle} = \Delta T * \dot{m} * c_{p\,Wasser}$$

Dabei ist $c_{p\,Wasser}$ die spezifische Wärmekapazität von Wasser in $kJ * kg^{-1} * K^{-1}$.

Der Wärmeentzug aller Rollen ergibt sich aus folgender Gleichung:

$$\dot{Q}_{Heiz} * \eta_f = (\ \dot{Q}_{Brammen} + \dot{Q}_{Rollen,berechnet} + \dot{Q}_{Wand}\ )$$

Dabei sind:

$\dot{Q}_{Heiz}$ der Energieverbrauch des gesamten Ofens (Gasverbrauch),

$\dot{Q}_{Brammen}$ die Energieabgabe der $Brammen = \Delta T_{Bramme} * \dot{m}_{Bramme} * c_{pBramme}$,

$\dot{Q}_{Rolle}$ der Wärmeentzug bzw. Energieabgabe durch das Kühlwasser für alle Rollen des Ofens,

$\dot{Q}_{Wand}$ die Energieabgabe über die Ofenwände,

$\eta_f$ der feuerungstechnische Wirkungsgrad und

n die Anzahl der Rollen im Ofen.

Der mittlere erwartete Wärmeentzug einer Rolle wird über die folgende Gleichung bestimmt:

$$\dot{Q}_{Rolle,berechnet} = \dot{Q}_{Rollen,berechnet} / n$$

Die Werte für $\dot{Q}_{Brammen}$, $\dot{Q}_{Rollen}$ und $\dot{Q}_{Wand}$ sind ofenzonentemperaturabhängig und werden im Prozessmodell für den CSP-Ofen berechnet. Im Prozessmodell für den CSP-Ofen wird die Aufheizung der Brammen im CSP-Ofen berechnet und Aussagen zu den erwarteten Wärmeverlusten von Wand, Rollen, der Wärmeabgabe an die Brammen und den feuerungstechnischen Wirkungsgrad gemacht. Die Energiebilanz wird auch für die einzelnen Zonen des Ofens aufgestellt. Mithilfe des Ofenmodells können in einer Erweiterung der Idee die Werte $\dot{Q}_{Rolle,berechet}$ direkt berechnet und auch zonenaufgelöst (Aufheiz-, Halte-, Fährzone) mit Hilfe der obigen Energiebilanz und auf eine Zone bezogen ermittelt werden. Daraus ergibt sich der berechnete Wärmeentzug bzw. die Energieabgabe durch das Kühlwasser $\dot{Q}_{Rolle}$. Durch Vergleich der mit dem Prozessmodell berechneten und dem erfindungsgemäß bestimmten Wärmeentzug durch das Kühlwasser $\Delta\dot{Q}_{Rolle}$ wird der Erhaltungszustand der Ofenrolle bestimmt. Dabei ist

$$\Delta\dot{Q}_{Rolle} = \dot{Q}_{(Rolle\ gemessen)} - \dot{Q}_{(Rolle\ berechnet)}$$

In Figur 2 sind die typischen Wärmeverluste über das Kühlwasser beton- und faserisolierter Ofenrollen dargestellt. Die Kurven weisen über die Zeit leichte Variationen auf, die sich mit unterschiedlichen Ofenfahrweisen erklären lassen.

Verändert sich $\Delta\dot{Q}_{Rolle}$ einer Rolle in einer vorgegebenen Zeit um mehr als einen empirisch bestimmten Grenzwert, z. B. um 10 %, ist die Isolierung der Rolle beeinträchtigt und die Rolle direkt oder bei der nächsten Wartungsmaßnahme zu inspizieren, um etwaige Beschädigungen festzustellen und Reparaturmaßnahmen zu ergreifen. Dies erlaubt eine vorbeugende Instandhaltung durch Wartung, Reparatur oder Austausch von Rollen.
Über die vorhergehenden Methoden hinaus kann der Verbrauch des Ofens über die Lebenszeit beobachtet werden. Dabei ist die Grundgleichung die folgende:

$$\dot{Q}_{Heiz} + \dot{Q}_{Luft} = \dot{Q}_{Brammen} + \dot{Q}_{Abgas} + \dot{Q}_{Rollen,berechnet} + \dot{Q}_{Wand}$$

$\dot{Q}_{Heiz}$ der Energieverbrauch des gesamten Ofens bzw. eines Teilbereiches d. h. z. B. einer Zone (Gasverbrauch),

$\dot{Q}_{Luft}$ der rückgewonnene Energie durch die vorgeheizte Luft für alle Rekuperatoren oder einen Teilbereiche d. h. z. B. einer Zone $= \Delta T_{Luft} * \dot{m}_{Luft} * c_{pLuft}$

$\dot{Q}_{Brammen}$ die Energieabgabe der $Brammen = \Delta T_{Bramme} * \dot{m}_{Bramme} * c_{pBramme}$ in dem gesamten Ofen oder dem Teilbereich,

$\dot{Q}_{Abgas}$ die Energieabgabe über das Abgas in Richtung Kamin bzw. in andere Zonen, je nachdem, ob der gesamte Ofen oder Teilbereiche betrachtet werden, $= \Delta T_{Abgas} * \dot{m}_{Abgas} * c_{pAbgas}$

$\dot{Q}_{Rolle,berechn.}$ der Wärmeentzug bzw. die Energieabgabe durch das Kühlwasser für alle Rollen des Ofens bzw. für einen Teilbereich d. h. z. B. einer Zone,

$\dot{Q}_{Wand}$ die Energieabgabe über die Ofenwände des gesamten Ofens bzw. eines Teilbereiches d. h. z. B. einer Zone,

Für alle Teilenergieströme bis auf den Wert $\dot{Q}_{Wand}$ können die simulierten Werte mit den Werten, die aus Messwerten bestimmt werden, verglichen werden. Dabei werden bei Inbetriebnahme der Anlage die Einzelwerte so angepasst, dass sie übereinstimmen. Im Laufe der Zeit kann dann der Vergleich der Einzelwerte genutzt werden, um Aussagen zum Status der Anlage zu machen. Z. B. wird diese Überprüfung wie im schon beschriebenen Fall für die Überprüfung des Erhaltungszustandes der Rollen genutzt. Wenn der simulierte Wert für $\dot{Q}_{Luft}$ von dem aus den Messwerten bestimmten Wert für eine bestimmte Zeit abweicht, dann sollte der entsprechende Rekuperator für die vorgeheizte Luft überprüft werden. Der Wert, der nicht überprüfbar ist, ist der Wert $\dot{Q}_{Wand}$. Mit der obigen Formel kann aber auf den tatsächlichen Wert zurückgeschlossen werden. D. h. man kann dieses Verfahren auch nutzen, um zumindest über eine Zone eine erhebliche Verschlechterung der Wandverluste zu detektieren. Dadurch kann man Hinweise bekommen, wann Instandhaltung für die wesentlichen Teile des Ofens (Rollen, Rekuperatoren, Wände) erforderlich ist.

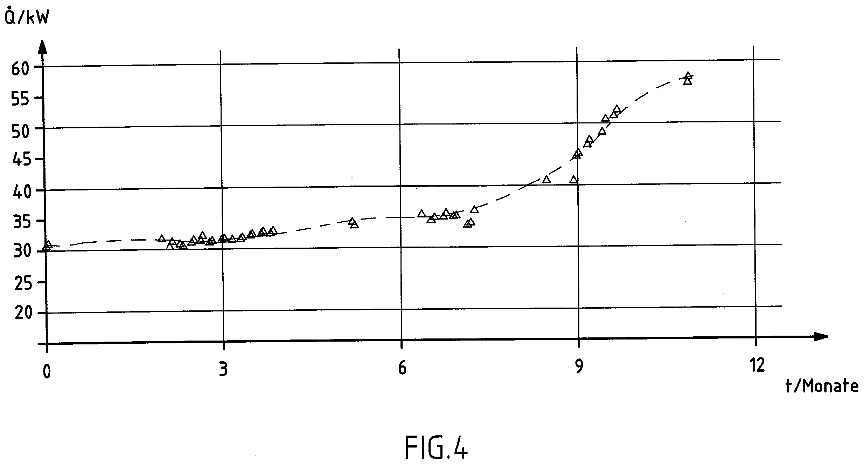

Figur 4 zeigt den Anstieg des Wärmeverlustes bei fortschreitender Schädigung einer Ofenrolle 1. Über das oben genannte Abweichungskriterium $\Delta \dot{Q}_{Rolle}$ wird nach der vorgeschlagenen Vorgehensweise der Rollenzustand erfasst und die Rolle bei Erreichen eines kritischen Zustands zur Reparatur oder Erneuerung ausgebaut.

Zur Erfassung der Wärmeverluste über die Ofenrolle ist eine Sensorik erforderlich, welche neben den Kühlwassertemperaturen auf der Ein- und Auslaufseite der einzelnen Rollen- oder Rollengruppen auch den Kühlwasserdurchsatz, z. B. in kg/s, bestimmt.

Zusätzliche, den vorliegenden Vorschlag verbessernde Maßnahmen sind ergänzende, geeignete Sensorik- und Regelungseinheiten, die mit den Prozessmodellen und/oder Prozessplanungsmodellen zwecks Überwachung und Regelung der Rollen kommunizieren. Dazu gehören beispielsweise eine Drehzahlmessung, welche über den Abgleich mit der Brammentransportgeschwindigkeit den Schlupf zwischen Bramme und Rolle regelt und damit sowohl die Lebensdauer der Rolle als auch die Oberflächenqualität der Brammenunterseite verbessern kann. Dabei wird die Brammentransportgeschwindigkeit über ein von den Transportrollen (Rollen) unabhängiges Messverfahren, beispielsweise über eine Lasermessung, bestimmt und mit der Umfangsgeschwindigkeit an der Oberfläche der einzelnen Ofenrollen verglichen. Dabei können verschiedene Zustände eingestellt werden wie z. B. höhere, gleiche, niedrigere oder gegenläufige Brammen- und Umfangsgeschwindigkeit einzelner Rollen. Durch Schlupf oder gegenläufige Drehrichtung einzelner Rollen können Aufbackungen, beispielsweise Zunderanhaftungen, von der Tragring- oder Brammenoberfläche entfernt werden. Eine weitere, die Erfindung verbessernde Maßnahme ist die Verwendung der Durchflussmessung zum Erkennen von Wasserverlust, Leitungsverstopfung oder Unterbrechung der Wasserversorgung.

Bezugszeichenliste:

1    Ofenrolle
2    Tragachse (Grundkörper)
3    Außenumfang
4    Tragring
5    Mess- und Regelungseinrichtung
6    Isolierung

a    Achse
F    Förderrichtung

**Patentansprüche**

1. Verfahren zum Betrieb einer kühlbaren Ofenrolle (1) zum Transport eines Bandes oder einer Bramme durch einen Ofen, umfassend eine um eine Achse (a) drehbar gelagerte Tragachse (2), auf der eine Anzahl an Tragringen (4) angeordnet ist, wobei im axialen Bereich zwischen zumindest zwei Tragringen (4) eine Isolierung (6) angeordnet ist, wobei die Isolierung (6) zumindest teilweise aus einem Fasermaterial besteht, bei dem die Ofenrolle (1) in ihrem Inneren mit einem Kühlmedium durchströmt wird, um die Ofenrolle (1) zu kühlen,
**dadurch gekennzeichnet, dass**
das Verfahren die Schritte aufweist:

a) Messen der Temperatur ($T_{Einlass}$) des in die Ofenrolle (1) eintretenden Kühlmediums und Messung der Temperatur ($T_{Auslass}$) des die Ofenrolle (1) verlassenden Kühlmediums und bilden der Temperaturdifferenz ($\Delta T = T_{Auslass} - T_{Einlass}$);
b) Messen der Mengenflusses ($\dot{m}$) des die Ofenrolle (1) durchströmenden Kühlmediums;

c) Bilden des Produkts aus Temperaturdifferenz ($\Delta$T) und Mengenfluss ( $\dot{m}$ );

d) Beobachten des Produkts aus Temperaturdifferenz ($\Delta$T) und Mengenfluss ( $\dot{m}$ ) über der Zeit;

e) Auslösen eines Signals, sobald der Wert des Produkts aus Temperaturdifferenz ($\Delta$T) und Mengenfluss ( $\dot{m}$ ) einen vorgegebenen Grenzwert überschreitet.

**2.** Verfahren nach Anspruch 1, **dadurch gekennzeichnet, dass** als Grenzwert ein prozentualer Wert eines Durchschnittswerts verwendet wird, der sich während einer vorgegebenen Kalibrierzeit bei einer neu zum Einsatz kommenden Ofenrolle ergibt.

**Claims**

**1.** Method of operating a coolable furnace roller (1) for transport of a strip or a slab through a furnace, comprising a support axle (2), which is mounted to be rotatable about an axis (a) and on which a number of support rings (4) is arranged, wherein an insulation (6) is arranged in the axial region between at least two support channels (4), wherein the insulation (6) consists at least partly of a fibre material, in which the furnace roller (1) is flowed through in its interior by a cooling medium in order to cool the furnace roller (1), **characterised in that**
the method comprises the steps:

a) measuring of the temperature ($T_{inlet}$) of the cooling medium entering the furnace roller (1) and measuring the temperature ($T_{oulet}$) of the cooling medium leaving the furnace roller (1) and forming the temperature difference ($\Delta T = T_{outlet} - T_{inlet}$);
b) measuring mass flow ($\dot{m}$) of the cooling medium flowing through the furnace roller (1);
c) forming the product of temperature difference ($\Delta$T) and mass flow ($\dot{m}$);
d) observing the product of temperature difference ($\Delta$T) and mass flow ($\dot{m}$) over time; and
e) triggering a signal as soon as the value of the product of temperature difference ($\Delta$T) and mass flow (m) exceeds a predetermined limit value.

**2.** Method according to claim 1, **characterised in that** a percentage value of an average value which arises during a predetermined calibration time in the case of a new furnace roller coming into use is used as the limit value.

**Revendications**

**1.** Procédé destiné à la mise en service d'un rouleau de four (1) apte à être refroidi, destiné au transport d'une bande ou d'une brame à travers un four, comprenant un axe de support (2) monté en rotation autour d'un axe (a), sur lequel sont disposés une multitude d'anneaux de support (4) ; dans lequel, dans la zone axiale ménagée entre au moins deux anneaux de support (4), est disposée une isolation (6) ; dans lequel l'isolation (6) est constituée au moins en partie d'une matière fibreuse ; dans lequel le rouleau de four (1) est traversé, dans son espace interne, par un milieu de refroidissement dans le but de refroidir le rouleau de four (1) ; **caractérisé en ce que** le procédé présente les étapes dans lesquelles :

a) on mesure la température ($T_{entrée}$) du milieu de refroidissement qui pénètre dans le rouleau de four (1) et on mesure la température ($T_{sortie}$) du milieu de refroidissement qui quitte le rouleau de four (1) et on calcule la différence de température ($\Delta T = T_{sortie} - T_{entrée}$) ;
b) on mesure le flux massique (m) du milieu de refroidissement qui traverse le rouleau de four (1) ;
c) on calcule le produit de la différence de température ($\Delta$T) et du flux massique ($\dot{m}$) ;
d) on observe le produit de la différence de température ($\Delta$T) et du flux massique ($\dot{m}$) au cours du temps ;
e) on déclenche un signal dès que la valeur du produit de la différence de température ($\Delta$T) et du flux massique ($\dot{m}$) dépasse vers le haut une valeur limite prédéfinie.

**2.** Procédé selon la revendication 1, **caractérisé en ce que** l'on utilise, à titre de valeur limite, une valeur en pourcentage d'une valeur moyenne, que l'on obtient au cours d'un temps d'étalonnage prédéfini dans le cas d'un nouveau rouleau de four qui est prévu pour être utilisé.

FIG.1

FIG.2

FIG.3a

FIG.3b

FIG.4

EP 3 519 115 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0471218 A1
- EP 0397231 A1
- WO 2015181736 A1
- EP 1197721 B1
- DE 2205694 A
- DE 4022768 C2
- DE 69313627 T2
- EP 0857933 A1
- US 6678628 B2
- EP 2317545 A1
- US 4991276 A